# FASCICULE DE BREVET EUROPEEN

(11) **EP 2 100 115 B1**
(45) Date de publication et mention de la délivrance du brevet: **07.12.2011**
(21) Numéro de dépôt: 06841877.1
(22) Date de dépôt: 07.12.2006
(51) Int. Cl.: G01L 5/10

(54) **DYNAMOMETRE ELECTRONIQUE**
ELEKTRONISCHE BELASTUNGSMASCHINE
ELECTRONIC DYNAMOMETER

(43) Date de publication de la demande: 16.09.2009
(73) Titulaire: Tractel S.A.S., 10100 Saint Hilaire sous Romilly (FR)
(72) Inventeur: DE CEUSTER, Jacques, 6900 Marche en Famenne (BE)
(74) Mandataire: Gaillarde, Frédéric F. Ch.
(86) Numéro de dépôt international: PCT/FR2006/002670
(87) Numéro de publication internationale: WO 2008/068391

(56) Documents cités:
- DE-A1- 4 103 765

## Description

La présente invention se rapporte à un dynamomètre électronique pour la mesure et l'affichage des efforts, tels que des charges ou des tensions, appliqués à deux liens coaxiaux, ledit dynamomètre comprenant, d'une part, un bloc capteur d'effort dont chacune des deux extrémités d'amarrage possède un oeillet dans lequel peut être passé un axe de raccordement à un élément de connexion à deux branches formant étrier, et d'autre part, un dispositif d'affichage, ledit bloc capteur portant une ou des jauges de contrainte et renfermant l'électronique nécessaire pour former un dispositif de mesure transmettant les données mesurées au dispositif d'affichage.

De façon bien connue, comme décrit par DE 41 03 765 A, la ou les jauges de contraintes sont fixées de façon solidaire sur le bloc capteur à un ou des endroits appropriés afin d'y mesurer les contraintes résultant de l'application d'un effort appliqué au dynamomètre dans l'axe des deux liens, ces derniers pouvant être des câbles, des chaînes ou des sangles. A cette fin, le bloc capteur présente une configuration aménagée pour que la ou les jauges de contraintes puissent mesurer l'effet de cet effort avec le maximum d'efficacité et de précision. Le signal généré par la ou les jauges de contraintes est traité par un dispositif électronique permettant de visualiser, sur l'écran de lecture d'un dispositif d'affichage, solidaire ou dissocié du dispositif de mesure, la valeur de cet effort mesuré sous forme d'unités de masse ou de force.

La société TRACTEL commercialise déjà un dynamomètre répondant à cette définition, notamment sous le nom Dynafor® LLX, donnant toute satisfaction.

De façon classique, un dynamomètre de ce type ne permet de connecter celui-ci à des liens coaxiaux, respectivement à chaque extrémité d'amarrage, que par un seul type standard, ou adapté, d'élément de connexion.

La présente invention a pour but de remédier à cet inconvénient en proposant un dynamomètre électronique permettant, à chacune de ses deux extrémités d'amarrage, d'élargir les possibilités de connexion à plusieurs types d'éléments de connexion, principalement suivant deux solutions adaptées l'une à une manille et l'autre à un accessoire pour chaîne tel qu'un crochet ou un anneau poire, selon les modèles standards du commerce. Un tel dynamomètre présentera alors l'avantage considérable de pouvoir être employé alternativement avec plusieurs types d'éléments de connexion à chacune de ses extrémités d'amarrage.

Pour cela, l'objet de la présente invention consiste en un dynamomètre électronique pour la mesure et l'affichage des efforts, tels que des charges ou des tensions, appliqués à deux liens coaxiaux, ledit dynamomètre comprenant, d'une part, un bloc capteur d'effort dont chacune des deux extrémités d'amarrage possède un oeillet dans lequel peut être passé un axe de raccordement à un élément de connexion à deux branches formant étrier, et d'autre part, un dispositif d'affichage, ledit bloc capteur comportant une ou des jauges de contrainte et renfermant l'électronique nécessaire pour former un dispositif de mesure transmettant les données mesurées au dispositif d'affichage, caractérisé en ce que chaque oeillet est supporté par une embase présentant en section longitudinale, de part et d'autre du plan dudit oeillet, un profil symétrique décroissant en gradins, de manière à former une pluralité de moyens de butée latéraux pour des branches d'élément de connexion à écartements différents

Ainsi, le fait de ménager un profil étagé adapté de part et d'autre du plan de l'oeillet permet de venir raccorder différents types d'élément de connexion standardisés comportant un étrier à deux branches.

En effet, il suffit, d'une part, de conférer à l'oeillet une épaisseur juste inférieure à l'entraxe mesuré au niveau des oreilles des branches de l'élément de connexion considéré comme le plus étroit, et d'autre part, de conférer à la largeur du dispositif de mesure au niveau de chaque gradin inférieur une épaisseur juste inférieure à l'entraxe mesuré au niveau des oreilles des branches de l'élément de connexion considéré comme le plus large, pour adapter, au choix, chaque extrémité d'amarrage du dispositif de mesure aux types correspondants d'éléments de connexion. II suffit enfin d'insérer un axe transversal successivement au travers de l'oreille de la première branche de l'étrier de l'élément de connexion, puis de l'oeillet, et enfin de l'oreille de la seconde branche, et de le verrouiller dans cette position, pour connecter convenablement l'élément de connexion au dispositif de mesure. Bien évidemment, le jeu latéral ménagé entre l'élément de connexion et l'extrémité d'amarrage doit être minimum pour ne pas fausser les mesures d'effort par désaxement. A cette fin, l'épaisseur de chaque extrémité d'amarrage entre les faces latérales opposées de deux gradins de même niveau est telle que chacune de ces faces constitue une butée latérale pour la branche d'étrier située de son coté.

Par conséquent, quel que soit le cas de figure, un dynamomètre selon l'invention permet d'assurer un positionnement correct de l'élément de connexion sur l'extrémité d'amarrage qui lui correspond, la mesure effectuée étant alors parfaitement fiable et précise.

Bien évidemment, même si l'intérêt est moindre, il doit être bien compris que des éléments de connexion spécifiques peuvent le cas échéant être également rapportés sur cet oeillet.

Avantageusement, le profil de l'embase comporte deux gradins.

Avantageusement, la face de chaque gradin, transversale à l'axe des liens, est sensiblement semi-circulaire autour de l'axe de l'oeillet qui lui correspond. De plus, cette face est avantageusement située de façon à ne pas offrir de butée longitudinale à l'oreille d'étrier située de son coté afin de ne pas altérer le fonctionnement du dispositif de mesure.

Avantageusement encore, chaque gradin, devant recevoir une branche de manille, présente une face dont le profil en section est incliné par rapport à l'axe de l'oeillet. Une telle inclinaison permet de s'adapter à la forme arrondie des oreilles de manille.

Selon une variante de réalisation préférée de l'invention, des aimants sont incorporés au dispositif de mesure. Il est alors possible d'utiliser un dispositif d'affichage amovible également équipé d'aimants, et apte à recueillir les informations émises par le dispositif de mesure par exemple par liaison radio. Il suffit alors à l'utilisateur de plaquer ce dispositif d'affichage contre le dispositif de mesure pour qu'il y soit maintenu par aimantation. Il est entendu que le dynamomètre selon l'invention peut avoir également un dispositif d'affichage intégré au corps du dispositif de mesure.

L'invention sera mieux comprise à l'aide de la description détaillée qui est exposée ci-dessous en regard du dessin annexé dans lequel :
La figure 1 est une vue en perspective d'un dynamomètre selon l'invention ;
La figure 2 est une vue de détail de l'une des deux extrémités d'amarrage du dynamomètre représenté à la figure 1;
La figure 3 est une vue de face de l'extrémité d'amarrage représentée à la figure 2 ;
La figure 4 est une vue en coupe selon la ligne IV-IV de l'extrémité d'amarrage représentée à la figure 3 ;
La figure 5 est une vue similaire à la figure 2, une fois qu'un accessoire pour chaîne du type anneau poire a été rapporté ;
La figure 6 est une vue similaire à la figure 2, une fois qu'une manille a été rapportée ;
La figure 7 est une vue en perspective d'un crochet standard pouvant être rapporté sur un dynamomètre selon l'invention.

Dans la description détaillée qui va suivre des figures définies précédemment, les mêmes éléments ou les éléments remplissant des fonctions identiques conserveront généralement les mêmes références.

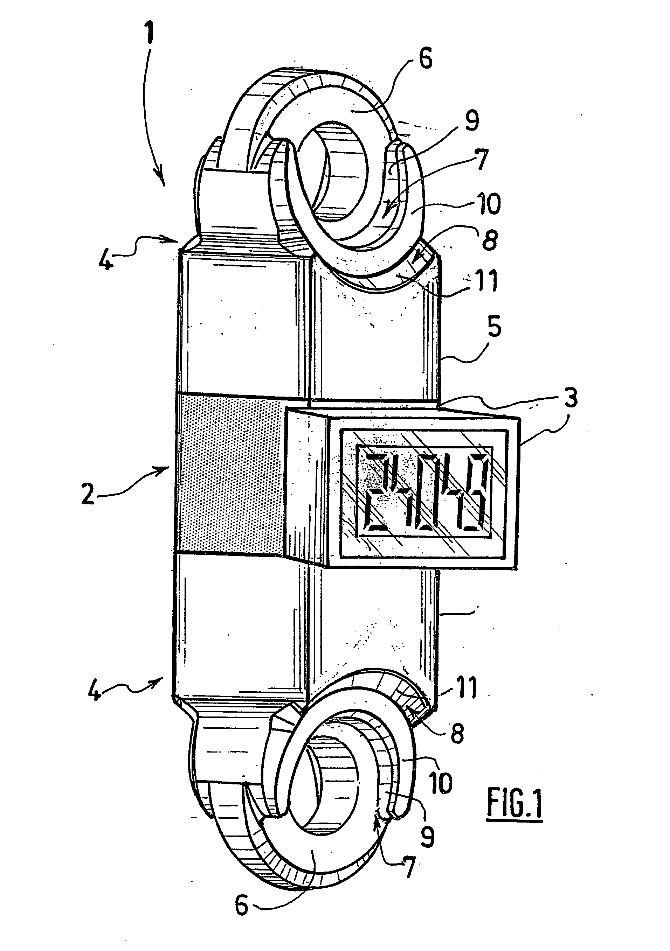

Un dynamomètre 1 selon l'invention, tel que représenté à la figure 1, comprend, d'une part, un bloc capteur d'effort 2, formant un dispositif de mesure dont chacune des deux extrémités d'amarrage 4 possède un oeillet 6, et d'autre part, un dispositif d'affichage 3.

Ledit bloc capteur 2 renferme une ou des jauges de contrainte et l'électronique (non représentés) nécessaire pour former le dispositif de mesure transmettant les données mesurées au dispositif d'affichage 3. Cette électronique est conforme à celle utilisée actuellement dans les dynamomètres bien connus de l'homme du métier, et ne sera pas décrite plus précisément car ne constituant pas l'objet de la présente l'invention.

Le dispositif d'affichage 3 est électronique et de préférence amovible, et peut être, au choix, solidarisé ou dissocié du dispositif de mesure. Pour cela, dans une variante préférée de réalisation, il est prévu d'équiper le bloc capteur 2 et le dispositif d'affichage 3 d'aimants (non représentés) aptes à permettre une fixation amovible par aimantation, ledit bloc capteur 2 livrant alors ses informations au dispositif d'affichage 3 par liaison radio.

Cependant, il est entendu que l'invention ne se limite pas à ce type de disposition, l'invention s'appliquant tout aussi bien au cas d'un montage du dispositif d'affichage 3 et du dispositif de mesure dans un boîtier commun, avec une liaison par fil ou radio.

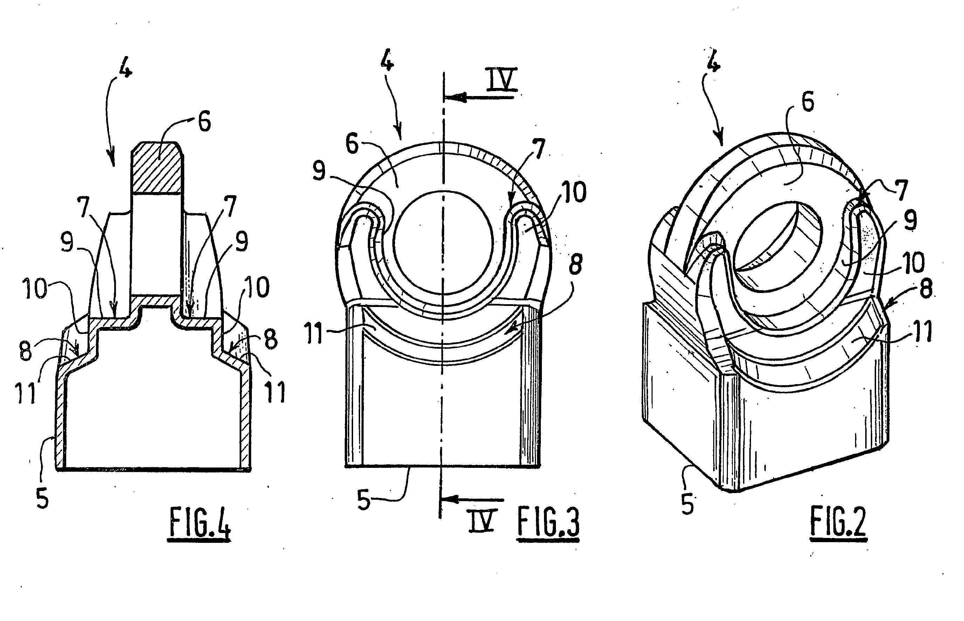

Comme représenté plus spécialement aux figures 2 à 4, chaque extrémité d'amarrage 4 comprend une embase 5 pour un oeillet 6 et présente en section longitudinale, de part et d'autre de l'oeillet 6, un profil étagé symétrique décroissant en gradins.

Plus précisément, ce profil étagé comporte, de façon symétrique de part et d'autre du plan de l'oeillet 6, un gradin 7 supérieur et un gradin 8 inférieur, et chaque gradin 7, 8 est sensiblement semi-circulaire autour de l'axe de l'oeillet 6.

Chaque gradin 7 se décompose en une première face 9 de largeur adaptée, dont le profil en section est parallèle à l'axe de l'oeillet 6, et en une seconde face constituée par la joue de l'oeillet 6.

Par ailleurs, chaque gradin 8 présente une première face 11 dont le profil en section est incliné par rapport à l'axe de l'oeillet 6 et une deuxième face 10 parallèle à la joue de l'oeillet 6. L'inclinaison de la face 11 permet de s'adapter à la forme arrondie des oreilles de manille.

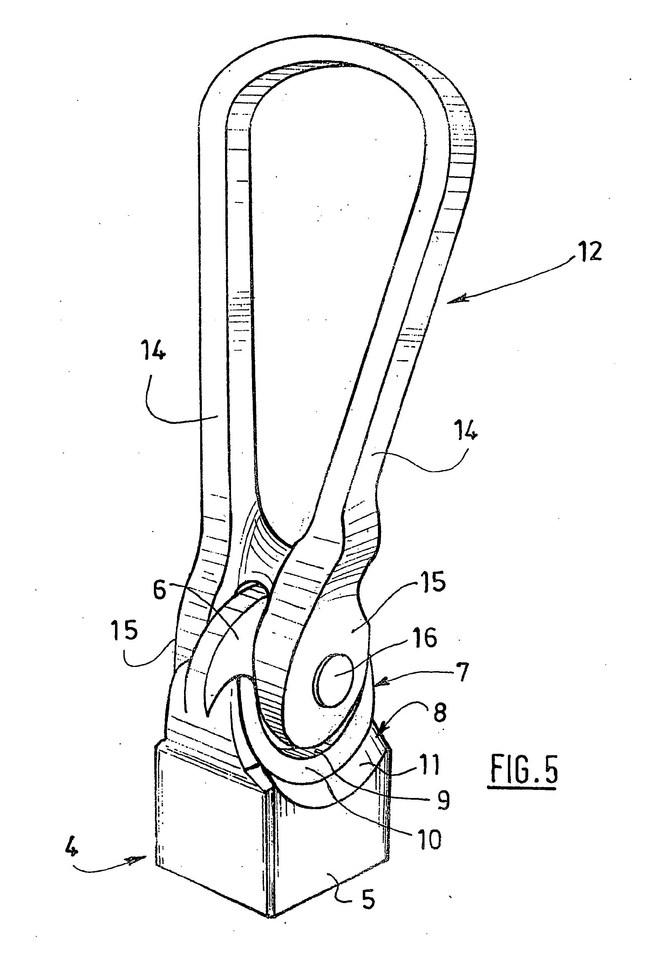

Un utilisateur peut alors décider, comme représenté à la figure 5, de rapporter un accessoire 12 pour chaîne standardisé, par exemple du type anneau-poire ou du type crochet, sur l'une des deux embases 5. Cet accessoire 12 comprend deux branches 14 formant étrier, l'entraxe au niveau des oreilles 15 et le diamètre desdites oreilles 15 étant standards dans cette gamme d'accessoires à chaîne.

Les branches 14 sont alors correctement positionnées sur l'embase 5 car leurs oreilles 15 viennent en butée latérale contre l'oeillet 6 dont l'épaisseur est choisie de manière à être légèrement inférieure au plus petit entraxe connu pour ce type d'accessoires 12 pour chaîne. Il est alors possible de glisser un axe 16 transversal au travers des deux oreilles 15 et de l'oeillet 6 pour connecter l'accessoire 12 dans cette position. Le jeu latéral entre les oreilles 15 et l'oeillet 6 est alors minimum pour ne pas fausser les mesures d'effort par désaxement.

Un dispositif adéquat selon les règles de l'art permet de verrouiller la position de l'axe 16.

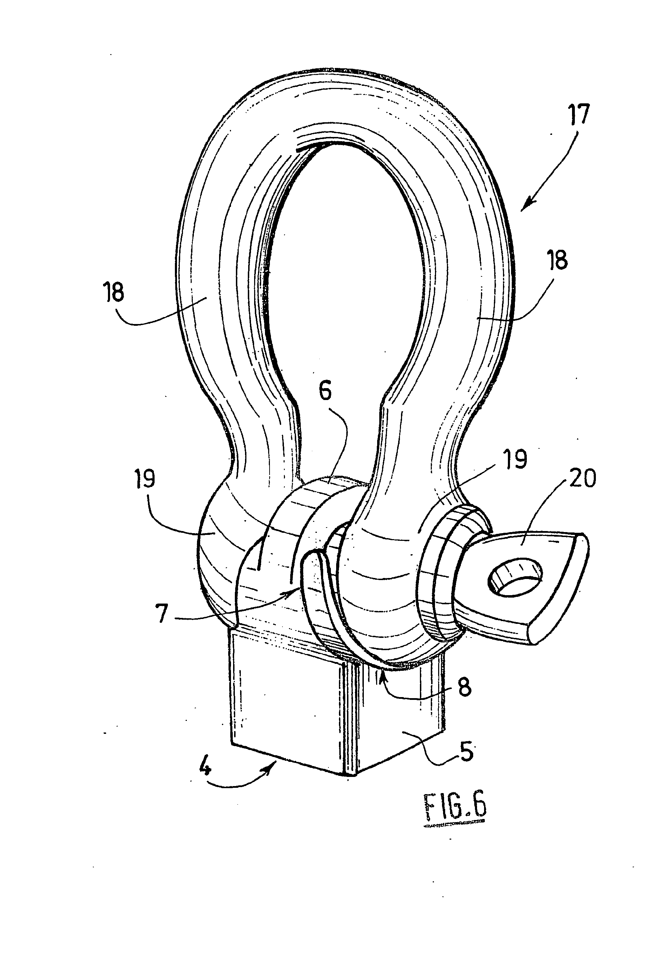

L'utilisateur peut également décider, comme représenté à la figure 6, de substituer une manille 17 standard à l'accessoire 12 sur l'embase 5. Cette manille 17 comprend deux branches 18 formant étrier, l'entraxe au niveau des oreilles 19 et le diamètre desdites oreilles 19 étant standards pour ce type d'élément de connexion.

Les branches 18 sont alors correctement positionnées sur l'embase 5 car leurs oreilles 19 viennent en butée latérale contre les faces 10 des gradins 8. Comme précédemment, il est alors possible de glisser un axe 20 transversal au travers des deux oreilles 19 et de l'oeillet 6 pour connecter la manille 17 dans cette position, le jeu latéral entre les oreilles 19 et l'oeillet 6 étant alors minimum pour ne pas fausser les mesures d'effort par désaxement.

Un dispositif adéquat selon les règles de l'art permet de verrouiller, la position de l'axe 20.

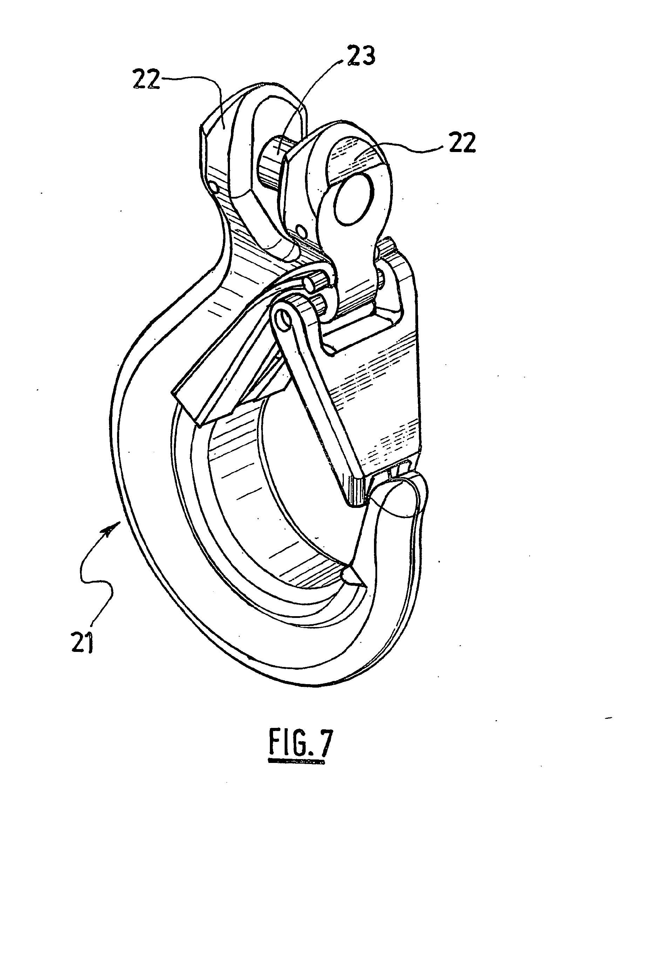

Par ailleurs, comme représenté à la figure 7, un crochet 21 standard peut également etre raccordé sur une embase 5 d'un dynamometre selon l'invention. En effet, comme décrit précédemment, il suffit pour cela de positionner les deux oreilles 22 du crochet 21 de part et d'autre de l'oeillet 6, puis de glisser un axe 23 transversal au travers desdites oreilles 22.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dynamomètre (1) électronique pour la mesure et l'affichage des efforts, tels que des charges ou des tensions, appliqués à deux liens coaxiaux, ledit dynamomètre comprenant, d'une part, un bloc capteur (2) d'effort dont chacune des deux extrémités d'amarrage (4) possède un oeillet (6) dans lequel peut être passé un axe de raccordement (16 ;20 ;23) à un élément de connexion (12 ;17 ;21) à deux branches (14 ; 18 ; 22) formant étrier, et d'autre part, un dispositif d'affichage (3), ledit bloc capteur comportant une ou des jauges de contrainte et l'électronique nécessaire pour former un dispositif de mesure transmettant les données mesurées au dispositif d'affichage, **caractérisé en ce que** chaque oeillet est supporté par une embase (5) présentant en section longitudinale, de part et d'autre du plan dudit oeillet, un profil symétrique décroissant en gradins (7, 8), de manière à former une pluralité de moyens de butée latéraux pour des branches d'élément de connexion à écartements différents.

2. Dynamomètre (1) selon la revendication 1, **caractérisé en ce que** chaque gradin (7, 8) est sensiblement semi-circulaire autour de l'axe de l'oeillet (6) qui lui correspond.

3. Dynamomètre (1) selon l'une quelconque des revendications 1 ou 2, **caractérisé en ce que** chaque gradin (8) présente une face (11) dont le profil en section est incliné par rapport à l'axe de l'oeillet (6).

4. Dynamomètre (1) selon l'une des revendications 1 à 3, **caractérisé en ce que** le profil de l'embase (5) comporte deux gradins (7, 8).

5. Dynamomètre (1) selon l'une quelconque des revendications 1 à 4, **caractérisé en ce que** le bloc capteur (2) et le dispositif d'affichage (3) sont des éléments séparés dans chacun desquels des aimants sont incorporés de façon que le dispositif d'affichage puisse être fixé de façon amovible sur le dispositif de mesure.

## Claims

1. An electronic dynamometer (1) for measuring and displaying forces, in particular charges or voltages, applied to two coaxial connections, said dynamometer comprising, on the one hand, a force sensor block (2) whereof each of the two docking ends (4) has an eyelet (6) in which a connector pin (16; 20; 23) can be passed for connecting to a connection element (12; 17; 21) with two branches (14; 18; 22) forming a yoke joint, and on the other hand, a display device (3), said sensor block including one or more strain gauges and the electronics necessary to form a measuring device transmitting the measured data to the display device, **characterized in that** each eyelet is supported by a base (5) having, in longitudinal cross-section, on either side of the plane of said eyelet, a symmetrical profile with decreasing steps (7, 8), so as to form a plurality of lateral stop means for the branches of the connection element with different spacings.

2. The dynamometer (1) according to claim 1, **characterized in that** each step (7, 8) is substantival semicircular around the axis of the eyelet (6) corresponding to it.

3. The dynamometer (1) according to any one of claims 1 or 2, **characterized in that** each step (8) has a surface (11) whereof the profile in cross-section is inclined relative to the axis of the eyelet (6).

4. The dynamometer (1) according to one of claims 1 to 3, **characterized in that** the profile of the base (5) includes two steps (7, 8).

5. The dynamometer (1) according to any one of claims 1 to 4, **characterized in that** the sensor block (2) and the display device (3) are separated elements into each of which magnets are incorporated so that the display device can be removably fixed on the measuring device.

## Patentansprüche

1. Elektronische Belastungsmaschine (1) zum Messen und Anzeigen von Kräften, wie zum Beispiel Lasten oder Spannungen, die an zwei koaxialen Verbindungen anliegen, wobei die Belastungsmaschine auf der einerseits einen Kraftsensorblock (2), von dem jedes der zwei Anschlagenden (4) eine Öse (6) besitzt, in die eine Verbindungsachse (16; 20; 23) eines Verbindungselements (12; 17; 21) mit zwei Armen (14; 18; 22), das einen Bügel bildet, einführbar ist, und andererseits eine Anzeigevorrichtung (3) umfasst, wobei der Aufnahmeblock eine oder Dehnungsmessstreifen und die notwendige Elektronik aufweist, um eine Messvorrichtung zu bilden, die die gemessenen Daten an die Anzeigevorrichtung überträgt, **dadurch gekennzeichnet, dass** jede Öse von einer Basis (5) getragen wird, die im Längsschnitt auf der einen und der anderen Seite der Ebene der Öse ein symmetrisches, in Stufen (7, 8) abnehmendes Profil derart aufweist, dass eine Vielzahl seitlicher Anschlagmittel für Verbindungselementarme mit unterschiedlichen Abständen gebildet werden.

2. Belastungsmaschine (1) nach Anspruch 1, **dadurch gekennzeichnet, dass** jede Stufe (7, 8) etwa halbkreisförmig um die Achse der Öse (6) ist, die ihr entspricht.

3. Belastungsmaschine (1) nach einem der Ansprüche 1 oder 2, **dadurch gekennzeichnet, dass** jede Stufe (8) eine Seite (11) aufweist, deren Profil im Schnitt im Verhältnis zur Achse der Öse (6) geneigt ist.

4. Belastungsmaschine (1) nach einem der Ansprüche 1 bis 3, **dadurch gekennzeichnet, dass** das Profil der Basis (5) zwei Stufen (7, 8) umfasst:

5. Belastungsmaschine (1) nach einem der Ansprüche 1 bis 4, **dadurch gekennzeichnet, dass** der Sensorblock (2) und die Anzeigevorrichtung (3) separate Elemente sind, wobei in jedem Magneten derart eingearbeitet sind, dass die Anzeigevorrichtung lösbar auf der Messvorrichtung befestigbar ist.
